# NEUE EUROPÄISCHE PATENTSCHRIFT

(11) **EP 0 721 821 B2**
(45) Veröffentlichungstag und Bekanntmachung des Hinweises auf die Entscheidung über den Einspruch: **26.10.2005**
(45) Hinweis auf die Patenterteilung: 17.05.2000
(21) Anmeldenummer: 95119796.1
(22) Anmeldetag: 15.12.1995
(51) Int. Cl.: B23Q 7/04

(54) **Anordung aus einerWerkzeugmaschine und einer Handhabungsvorrichtung**
Configuration of a machine tool and a handling apparatus
Ensemble constitué d'une machine-outil et d'un dispositif de manipulation

(30) Priorität: 12.01.1995 DE 19500652
(43) Veröffentlichungstag der Anmeldung: 17.07.1996
(73) Patentinhaber: FELSOMAT GmbH & Co. KG, D-75203 Königsbach-Stein (DE)
(72) Erfinder: Jäger, Helmut F., D-75203 Königsbach-Stein (DE); Peschina, Jürgen, D-75438 Knittlingen (DE)
(74) Vertreter: Gahlert, Stefan

(56) Entgegenhaltungen:
- WO-A1-85/03668
- CH-A- 686 818
- DE-A- 2 235 771
- DE-A- 3 206 547
- DE-A- 3 446 702
- FR-A- 1 248 232
- FR-A- 1 314 746
- GB-A- 2 087 768
- PROSPEKT DER FIRMA ZINGEL ENGINEERING KNICKARM ROBOTER

## Beschreibung

Die Erfindung betrifft eine Anordnung aus einer Werkzeugmaschine und einer Handhabungsvorrichtung gemäß dem Oberbegriff.des Anspruchs 1, wie aus der Firmenschrift "Knickarmroboter" der Fa. Zingel Engineering aus dem Juni 1983 bekannt ist.

Eine Handhabungsvorrichtung für eine Werkzeugmaschine, mit einem Portal, mit einem in Horizontalrichtung gesteuert verfahrbaren Schlitten, an dem ein erster Schwenkarm vorgesehen ist, der an seinem freien Ende ein erstes Handhabungselement zur Handhabung eines Teils aufweist, wobei der erste Schwenkarm um eine horizontale Achse gesteuert verschwenkbar ist, mit einer NC-Steuerung für die Y-Achse und die A-Achse zur Steuerung einer Bewegung des ersten Handhabungselements seitlich in die Werkzeugmaschine hinein oder aus dieser hinaus, sowie zur Bewegung des ersten Handhabungselements in einer vertikalen Ebene, ist aus der FR-A-1 248 232 bekannt.

Bei der bekannten Handhabungsvorrichtung läßt sich ein Schlitten auf einem Portal in Horizontalrichtung verfahren, wobei auf dem Schlitten ein Schwenkarm angeordnet ist, der sich um eine zum Portal parallele Achse verschwenken läßt, um mittels eines am Ende vorgesehenen Greifelementes Teile von einer vorbestimmten Position eines Förderbandes zu übernehmen und in den Arbeitsraum einer Werkzeugmaschine einzubringen und um Teile aus dem Arbeitsraum zu entnehmen und auf dem Förderband abzulegen.

Eine derartige Anordnung ist wegen des notwendigen Bandantriebes und dem senkrecht dazu angeordneten Portal außerordentlich platzaufwendig und daher kaum in eine automatische Fertigungslinie zu integrieren.

Größere Fertigungslinien sind heutzutage meist in einzelne Fertigungszellen unterteilt, in denen Werkzeugmaschinen angeordnet sind, die zum Beispiel als Drehmaschinen, Bearbeitungszentren oder Schleifmaschinen ausgeführt sein können und denen über Handhabungseinrichtungen Werkstücke zugeführt werden. Dabei ist die jeweilige Werkzeugmaschine durch Schutzwände nach außen abgeschlossen, um sicherzustellen, daß von außen nicht in laufende Arbeitsprozesse eingegriffen werden kann und um das Kühlschmiermittel nach außen abzuschirmen. Bei Schleifmaschinen muß darüberhinaus noch eine Sicherheit gegen das Bersten von Schleifscheiben gewährleistet sein.

Zum Transport von Werkstücken oder anderen Teilen in die Werkzeugmaschine und aus der Werkzeugmaschine heraus ist in herkömmlicher Weise ein oberhalb der Werkzeugmaschine verlaufendes Portal vorgesehen, an dem ein waagrecht verfahrbarer Schlitten vorgesehen ist, an dem wiederum eine in Vertikalrichtung verfahrbare Linearachse vorgesehen ist, an deren Ende ein Handhabungselement zur Handhabung der Werkstücke vorgesehen ist.

Mit einem derartigen System mit zwei zueinander senkrecht angeordneten Linearachsen läßt sich eine Zu- und Abfuhr der Werkstücke in bekannter Weise erreichen.

Nachteilig ist hierbei die relativ hohe Baugröße, die durch das oberhalb der Werkzeugmaschine verlaufende Portal bedingt ist. Ferner ist die von oben durch die Spritzschutzwand der Werkzeugmaschine eintauchende Linearachse nachteilig infolge von Problemen mit der notwendigen Abdichtung der Spritzschutzwand an der Oberseite.

Ferner ist es bekannt, in den Arbeitsraum der Werkzeugmaschine ein Portal zu integrieren, an dem ein horizontal verlaufender Schlitten mit einer vertikalen Linearachse befestigt ist. Zwar wird hierbei das senkrechte Eintauchen durch die Spritzschutzwand von oben vermieden. Jedoch hat diese Ausführung den Nachteil, daß der Arbeitsraum innerhalb der Werkzeugmaschine durch das Portal und die vertikale Linearachse eingeschränkt wird, so daß eine Bedienperson innerhalb der Werkzeugmaschine, die etwa die Werkzeugmaschine einrichtet, dadurch stark behindert wird. Ferner ergibt sich durch das Portal eine Behinderung durch Tropföl. Schließlich lassen sich infolge der eingeschränkten Baulänge der Vertikalachse außerhalb der Werkzeugmaschine nur in eingeschränktem Maße Teile aufnehmen. Ferner wird das Portal durch die entsprechend vergrößerten Baulängen ziemlich teuer.

Der Erfindung liegt somit die Aufgabe zugrunde, eine Werkzeugmaschine mit einer Handhabungsvorrichtung zu schaffen, die auch bei Werkzeugmaschinen mit geringer Bauhöhe einsetzbar ist, ohne daß ein Portal über der Werkzeugmaschine verläuft, wobei eine leichte Zugänglichkeit zum Arbeitsraum innerhalb der Werkzeugmaschine ermöglicht ist und gleichzeitig eine Bedienperson innerhalb der Werkzeugmaschine möglichst wenig behindert wird.

Diese Aufgabe wird erfindungsgemäß durch eine Anordnung aus einer Werkzeugmaschine und einer Handhabungsvorrichtung gemäß Anspruch 1 gelöst.

Erfindungsgemäß wird so ein um eine horizontale Achse schwenkbarer Schwenkarm benutzt, um zusammen mit der in Horizontalrichtung verlaufenden Linearachse einen Transport von Werkstücken oder anderen Teilen seitlich in die Werkzeugmaschine hinein oder aus dieser hinaus, sowie eine Bewegung der Werkstücke in einer vertikalen Ebene entlang von linearen oder gekrümmten Bahnen zu ermöglichen. Die bisher übliche in Vertikalrichtung verlaufende Linearachse wird so erfindungsgemäß durch den Schwenkarm ersetzt. Erfindungsgemäß wird somit eine horizontal verlaufende Linearachse mit einer Schwenkachse kombiniert. Damit ergibt sich eine erheblich geringere Baugröße als bei herkömmlichen Handhabungsvorrichtungen, bei denen eine vertikale Linearachse mit einer horizontalen Linearachse kombiniert ist. Auch lassen sich die Teile infolge der Schwenkbewegung erheblich schneller zu- und abführen als unter Verwendung von herkömmlichen Linearachsen.

Desweiteren kann dadurch, daß das Handhabungsgerät lediglich seitlich mit dem Schwenkarm bzw. mit dem Schlitten, an dem dieser befestigt ist, in die Werkzeugmaschine hineinreichen muß, die Werkzeugmaschine auch an ihrer Oberseite vollständig geschlossen ausgeführt werden. Dies ist besonders vorteilhaft, da Abdichtungsprobleme an der Oberseite der Werkzeugmaschine entfallen. Auch wenn die Werkzeugmaschine als Schleifmaschine ausgebildet ist, ist die berstsichere Ausführung der Schleifmaschine vereinfacht.

Das Handhabungsgerät ermöglicht ferner durch die Schwenkmöglichkeit des Schwenkarms eine erheblich schnellere Zufuhr bzw. Entnahme von Werkstücken in bzw. aus dem Arbeitsraum der Werkzeugmaschine. Ferner ergibt sich keine Behinderung für eine Bedienperson innerhalb der Werkzeugmaschine, da lediglich der Schwenkarm und nicht der Horizontalträger seitlich in den Arbeitsraum eintauchen muß und dieser jederzeit vollständig aus dem Arbeitsraum der Werkzeugmaschine hinausgefahren werden kann, so daß der Arbeitsraum für das Bedienpersonal vollständig frei zugänglich ist. Desweiteren tritt keine Behinderung durch Tropföl von der Handhabungsvorrichtung auf. Auch kann die Vorrichtung leicht zugänglich in Arbeitshöhe installiert werden.

Zwar ist es grundsätzlich bekannt, an einem Portal einen Roboter verfahrbar anzubringen, der mit mehreren NC-Achsen ausgestattet ist. Jedoch ist dadurch die Erfindung nicht nahegelegt, da erfindungsgemäß statt eines aufwendigen Roboters lediglich ein Schwenkarm mit einer Horizontalachse kombiniert ist, was einen erheblich vereinfachten, platz- und kostensparenden Aufbau bedeutet.

Gemäß einer vorteilhaften Weiterbildung der Erfindung ist auf dem Schlitten ein zweiter gesteuert verschwenkbarer Schwenkarm mit einem zweiten Handhabungselement vorgesehen.

Hierbei kann das erste Handhabungselement beispielsweise ein Ergreifen von vertikal orientierten Teilen ermöglichen, während das zweite Handhabungselement ein Ergreifen von horizontal orientierten Teilen ermöglicht. Somit läßt sich eine schnelle Handhabung von verschieden orientierten Teilen mit einfachen Mitteln ermöglichen.

Dabei ist es möglich, beide Schwenkarme auf einer gemeinsamen Horizontalachse anzuordnen und mittels eines einzigen Antriebs zu bewegen, wobei der eine Schwenkarm in die Werkzeugmaschine hineinragen kann, während der andere Schwenkarm in die andere Richtung weisen kann. Dies führt zur Einsparung einer NC-Achse.

Bei einer weiteren Ausgestaltung der Erfindung sind in Abwandlung der zuvorgenannten Ausführung zwei unabhängige Schlitten auf dem Portal verfahrbar angeordnet, an denen jeweils ein oder auch mehrere Schwenkarme um horizontale Achsen gesteuert verschwenkbar vorgesehen sind.

Diese Maßnahme hat den Vorteil, daß die Geschwindigkeit bei der Handhabung von Teilen erheblich gesteigert wird, da zu gleicher Zeit, während derer der erste Schwenkarm beispielsweise gerade ein Werkstück einer im Arbeitsraum vorgesehenen Werkzeugmaschine zuführt, der zweite Schwenkarm des zweiten Schlittens bereits ein weiteres Werkstück heranführen kann.

Dabei ist es möglich, zwischen dem ersten und dem zweiten Schwenkarm Teile direkt zu übergeben.

Gemäß einer weiteren Ausgestaltung der Erfindung ist eine Bereitstellungsstation zur Bereitstellung von Teilen vorgesehen, wobei eine Zwischenstation zwischen der Bereitstellungsstation und der Werkzeugmaschine vorgesehen ist, und wobei die Teile wahlweise mittels des ersten Schwenkarmes oder mittels des zweiten Schwenkarmes zwischen der Bereitstellungsstation und der Zwischenstation oder zwischen der Zwischenstation und der Werkzeugmaschine bewegbar sind.

Während so neue Teile an die Bereitstellungsstation herangeführt werden und von dieser entnommen werden können, können weitere Werkstücke bereits auf der Zwischenstation beispielsweise mit einer zusätzlichen Einrichtung ausgerichtet werden, vermessen werden oder in sonstiger Weise vorbereitet werden. Auch können etwa senkrecht bereitgestellte Teile unmittelbar von der Bereitstellungsstation mittels eines Schwenkarmes entnommen werden, während waagrecht bereitgestellte Teile etwa von der Zwischenstation mittels eines entsprechend ausgerichteten Handhabungselementes des anderen Schwenkarms entnommen werden können.

Sollen dabei abwechselnd von verschiedenen Stationen Teile entnommen bzw. zugeführt werden, so ist dabei gleichzeitig durch die beiden Schwenkarme eine schnellere Handhabung ermöglicht, da der Schlitten nicht ständig zwischen den Stationen vollständig verfahren muß, da die beiden Schwenkarme in unterschiedliche Richtungen weisen können und sogar Teile zwischen diesen beiden Schwenkarmen übergeben werden können.

Gemäß einer weiteren Ausgestaltung der Erfindung ist bei zumindest einem Schwenkarm das Handhabungselement mit dem Antrieb des Schwenkarms zwangsgekoppelt, um bei Verschwenkung des Schwenkarmes die Winkellage des Werkstückes beizubehalten.

Somit wird auf besonders einfache Weise die Beibehaltung der Winkellage eines vom Handhabungselement aufgenommenen Teiles bei Verschwenkung des Schwenkarmes ermöglicht.

Darüberhinaus könnte natürlich auch eine zusätzliche NC-Achse vorgesehen sein, um die durch Verschwenkung des Schwenkarmes verursachte Veränderung der Winkellage auszugleichen.

Eine besonders einfache Ausführung ergibt sich jedoch insbesondere dann, wenn an zumindest einem Schwenkarm ein Zahnriemengetriebe zur Verschwenkung des Schwenkarmes vorgesehen ist.

Dabei kann der Zahnriementrieb zur Zwangskopplung verwendet werden, um die Winkellage des Handhabungselementes bei Verschwenkung des Schwenkarmes beizubehalten.

In zusätzlicher Weiterbildung der Erfindung umfaßt zumindest ein Handhabungselement einen Doppelgreifer.

Dadurch kann mittels eines einzigen Schwenkarmes ohne zwischenzeitliches Verfahren einerseits ein Werkstück aus dem Arbeitsraum der Werkzeugmaschine entnommen werden und andererseits sogleich ein neues Werkstück zugeführt werden. Der Wechsel zwischen Rohteil und Fertigteil kann somit erheblich beschleunigt werden.

In zusätzlicher Weiterbildung der Erfindung weist dabei der Doppelgreifer zwei an einer Dreheinheit winklig, z.B. um 90° zueinander versetzt angeordnete Greifer auf, wobei die Dreheinheit an einem Halter verschwenkbar festgelegt ist, und wobei den Greifern eine gemeinsame Betätigungseinrichtung zum Öffnen und Schließen der Greifer zugeordnet ist, mittels derer der erste Greifer in einer ersten Stellung der Dreheinheit und der zweite Greifer in einer zweiten Stellung der Dreheinheit aktivierbar ist.

Diese Maßnahme hat den Vorteil, daß sich eine besonders kompakte und platzsparende Bauweise des Doppelgreifers ergibt, so daß dieser auch bei schwer zugänglichen Werkstückspannsituationen innerhalb des Arbeitsraumes einer Werkzeugmaschine eingesetzt werden kann.

In zusätzlicher Weiterbildung dieser Ausführung weist jeder Greifer zwei Greifelemente auf, die auf zueinander parallelen Achsen jeweils am äußeren Rand der Dreheinheit schwenkbar gelagert sind und jeweils mittels einer dazwischen angeordneten Spanneinheit in Richtung auf eine Schließstellung vorgespannt sind, und bei der die gemeinsame Betätigungseinrichtung ein am Halter angeordneter Fluidzylinder ist, über dessen ausfahrbaren Kolben die jeweilige Spanneinheit zur Bewegung der Greifelemente gegen die Kraft eines Federelementes in eine Öffnungsstellung verschiebbar ist.

Auf diese Weise sind die Greifelemente in Richtung auf die Schließstellung federnd beaufschlagt und können durch Ausfahren des Kolbens des Fluidzylinders in einfacher Weise in die Öffnungsstellung überführt werden. Somit ergibt sich ein außerordentlich einfacher und platzsparender Aufbau.

In zusätzlicher Weiterbildung der zuvor genannten Ausführung wirkt das Federelement auf einen Schieber, der über Mitnehmerelemente mit den beiden drehbar festgelegten Enden der Greifelemente gekoppelt ist, um diese in Richtung auf die Schließstellung derart zu beaufschlagen, daß die freien Enden der Greifelemente gegeneinander vorgespannt sind.

Somit sind die Greifelemente jedes Greifers in besonders einfacher Weise in Richtung auf die Schließstellung vorgespannt und können durch Verschiebung des Schiebers zur Öffnung des Greifers nach außen bewegt werden.

Der Doppelgreifer ist zweckmäßigerweise nach außen abgedichtet, um ein zuverlässiges Arbeiten innerhalb des Arbeitsraumes einer Werkzeugmaschine auch unter Einwirkung von Kühlschmiermittel zu ermöglichen.

Es versteht sich ferner, daß die vorstehend genannten und die nachstehend noch zu erläuternden Merkmale der Erfindung nicht nur in der jeweils angegebenen Kombination, sondern auch in anderer Kombination oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Darin zeigen:
- Fig. 1: eine schematische Ansicht einer erfindungsgemäßen Handhabungsvorrichtung mit einer daneben angeordneten Werkzeugmaschine;
- Fig. 2: eine teilweise geschnittene Ansicht auf die beiden Schwenkarme gemäß Fig. 1 von oben in vergrößerter Darstellung;
- Fig. 3: eine vergrößerte Darstellung eines Handhabungselementes mit einem Doppelgreifer, das am freien Ende eines jeweiligen Schwenkarmes gemäß den Fig. 1 und 2 befestigt werden kann und
- Fig. 4: eine Teilansicht einer gegenüber der Ausführung gemäß Fig. 1 leicht abgewandelte Ausführung eines erfindungsgemäßen Handhabungsgerätes.

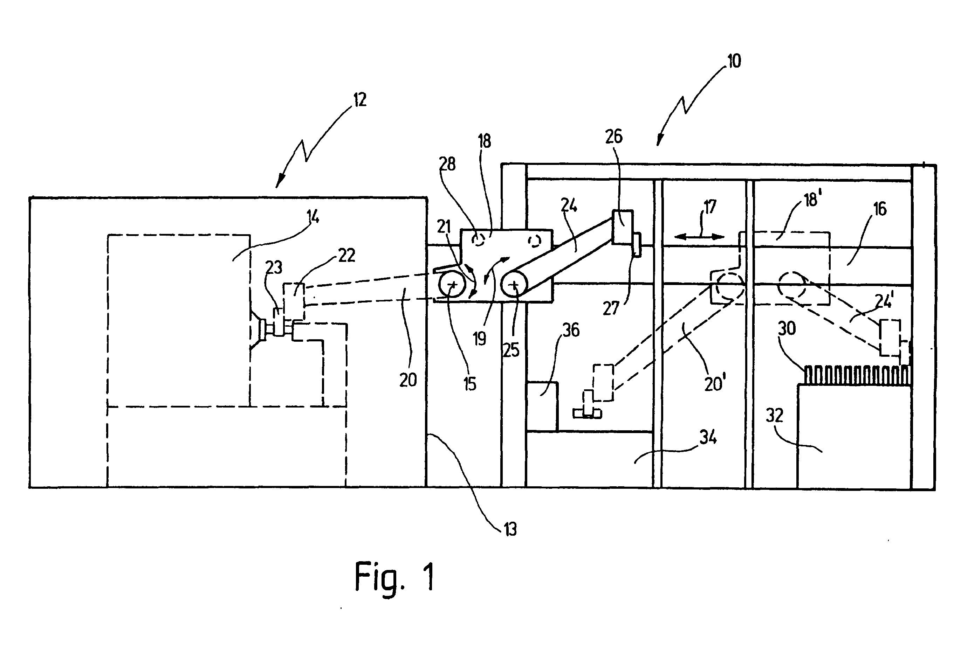

In Fig. 1 ist eine erfindungsgemäße Handhabungsvorrichtung schematisch dargestellt und insgesamt mit der Ziffer 10 bezeichnet. Die Handhabungsvorrichtung 10 dient dazu, um Teile 30 in Form von Werkstücken von außen in eine daneben angeordnete herkömmliche Werkzeugmaschine 12 einzubringen bzw. aus dieser zu entnehmen.

In der Werkzeugmaschine 12 ist eine Werkzeugmaschine 14 bekannter Bauart, zum Beispiel eine Drehmaschine vorgesehen. Die Werkzeugmaschine 12 ist nach außen hin allseitig durch Schutzwände 13 abgeschlossen, wobei lediglich an der Seitenwand, die der Handhabungsvorrichtung 10 zugewandt ist, ein entsprechender Ausschnitt vorgesehen ist, um eine Zuführung von Teilen 30 in den Arbeitsraum bzw. Entnahme aus dem Arbeitsraum der Werkzeugmaschine 14 zu ermöglichen.

Die Schutzwand 13 dient zum einen als Spritzschutz und zum anderen dazu, die notwendige Arbeitssicherheit zu gewährleisten, so daß etwa ein unbeabsichtigtes Eingreifen von außen in einen laufenden Bearbeitungsprozeß verhindert wird.

Die erfindungsgemäße Handhabungsvorrichtung weist ein waagrechtes Portal 16 auf, das an mehreren vertikalen Streben befestigt ist.

Auf dem Portal 16 ist gemäß dem Pfeil 17 ein Schlitten 18, der auf Rollen 28 gelagert ist, in waagrechter Richtung verfahrbar.

Am Schlitten 18 sind ein erster Schwenkarm 20 und ein zweiter Schwenkarm 24 verschwenkbar festgelegt. Der erste Schwenkarm 20 ist gemäß dem Pfeil 21 um eine horizontale Achse 15 verschwenkbar, so daß sein freies Ende, an dem ein erstes Handhabungselement 22 vorgesehen ist, das eine schematisch mit der Ziffer 23 angedeuteten Doppelgreifer umfaßt, in einer vertikalen Ebene verschwenkbar ist. Da der Schlitten 18 in Pfeilrichtung 17 mittels einer NC-Steuerung gesteuert verfahrbar ist (Y-Achse) und gleichzeitig der erste Schwenkarm 20 um seine horizontale Schwenkachse 15 mittels einer NC-Steuerung gesteuert verschwenkbar ist (A-Achse), läßt sich der Doppelgreifer 23 des Handhabungselementes 22 sowohl auf linearen Bahnen als auch auf gekrümmten Bahnen innerhalb einer vertikalen Ebene bewegen.

Obwohl das Portal 16 nur bis an den Rand der Schutzwand 13 der Werkzeugmaschine 12 heranreicht, können somit mit Hilfe des weit ausladenden ersten Schwenkarmes 20 Teile 30 in den Arbeitsraum der Werkzeugmaschine 14 hineingebracht und an diese übergeben werden bzw. aus dem Arbeitsraum der Werkzeugmaschine 14 entnommen werden.

Da der erste Schwenkarm 20 vollständig aus der Werkzeugmaschine 12 herausgefahren werden kann, sind Behinderungen während der Bearbeitung von Werkstücken ausgeschlossen. Für eine Bedienungsperson innerhalb der Werkzeugmaschine 12 ist es daneben außerordentlich vorteilhaft, daß der erste Schwenkarm 20 in Arbeitshöhe seitlich in die Werkzeugmaschine 12 hineinragt. Mittels des zweiten Schwenkarmes 24, an dessen freien Ende wiederum ein zweites Handhabungselement 26 vorgesehen ist, das einen Doppelgreifer 27 umfaßt, und das gleichfalls um eine waagrechte Schwenkachse 25 gemäß dem Pfeil 19 gesteuert verschwenkbar ist, können zur gleichen Zeit, während derer innerhalb des Arbeitsraumes der Werkzeugmaschine 12 Werkstücke 30 gehandhabt werden, auch außerhalb der Werkzeugmaschine 12 Werkstücke 30 gehandhabt werden, soweit dies die Geometrie der beiden auf einem Schlitten angeordneten Schwenkarme erlaubt. Dadurch ist eine schnelle Übergabe von Werkstücken 30 zwischen den beiden Doppelgreifern 22, 27 ermöglicht bzw. ein schnelleres Ein- und Ausfahren der Werkstücke 30 in die Werkzeugmaschine 12, da wahlweise entweder mit dem ersten Schwenkarm 20 oder dem zweiten Schwenkarm 24 gearbeitet werden kann und somit die sonst erforderlichen Zeiten zum Verschwenken eines Schwenkarms verkürzt werden, wenn etwa die Schwenkarme zuvor in verschiedene Richtungen weisen.

Diese Situation ist anhand einer gestrichelt dargestellten Position 18' des Schlittens verdeutlicht, in dem dieser weit aus der Werkzeugmaschine 12 herausgefahren ist. In der dargestellten Position 18' reicht der erste Schwenkarm 20' nach unten zu einer Zwischenstation 34 herunter, um dort ein Werkstück einer Meßeinrichtung zuzuführen, die schematisch mit der Ziffer 36 angedeutet ist. Dagegen weist der zweite Schwenkarm 24' in die entgegengesetzte Richtung nach unten, um ein Werkstück 30 von einer Bereitstellungsstation 32 zu entnehmen.

Es versteht sich, daß die beiden Schwenkarme 20, 24 beliebig mittels ihrer NC-Steuerung (A-Achse) verschwenkt werden können, wobei der Schlitten 18 gleichzeitig verfahren werden kann, um entweder gleichzeitig oder abwechselnd nacheinander mit dem ersten Schwenkarm 20 oder mit dem zweiten Schwenkarm 24 Werkstücke 30 oder andere Teile zu handhaben.

Der gleichzeitige Einsatz der beiden Schwenkarme 20, 24 ist natürlich durch die Tatsache eingeschränkt, daß sich beide auf einem Schlitten 18 befinden. Diese Beschränkung läßt sich überwinden, wenn zwei oder mehr Schlitten auf dem Portal vorgesehen sind, an denen Schwenkarme um horizontale Achsen verschwenkbar vorgesehen sind. Eine derartige Ausführung ist schematisch in Fig. 4 dargestellt, die insgesamt mit der Ziffer 100 bezeichnet ist. Hierbei sind zwei unabhängige Schlitten 18", 18''' auf dem Portal 16 vorgesehen, an denen jeweils ein Schwenkarm 20", 24" gesteuert verschwenkbar festgelegt ist. Alternativ könnte auch ein zweiter Schwenkarm zusammen mit dem ersten Schwenkarm 20" auf einer gemeinsamen horizontalen Achse vorgesehen sein, wie durch den gestrichelten Schwenkarm 24''' angedeutet ist. Somit können beide Schwenkarme 20", 24''' durch einen einzigen Antrieb auf kostensparende Weise angetrieben werden.

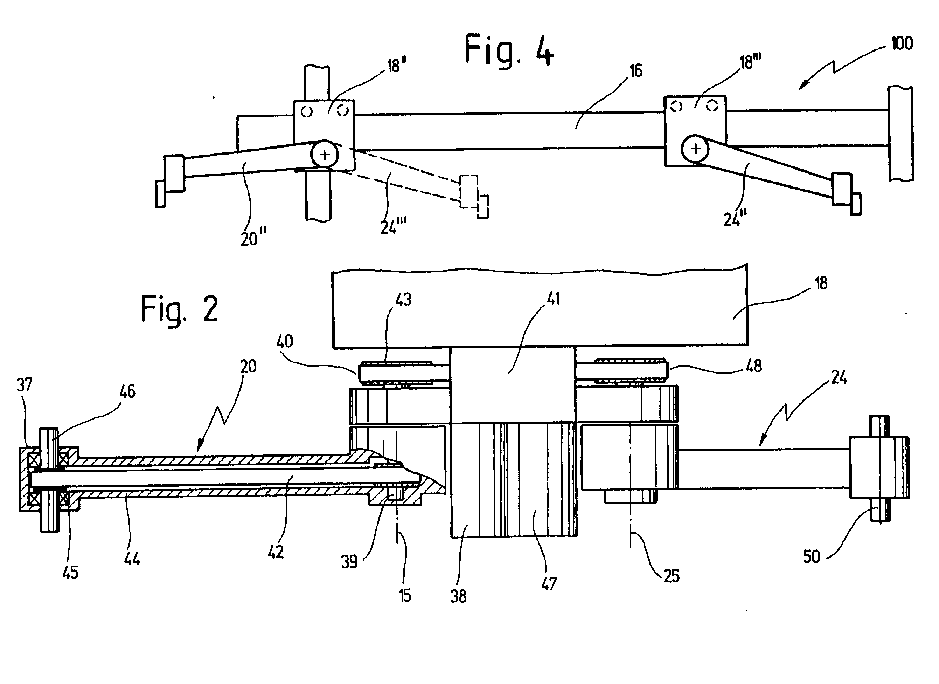

Der Aufbau der Schwenkarme gemäß Fig. 1 oder Fig. 4 ist aus Fig. 2 näher zu ersehen.

Beide Schwenkarme 20, 24 sind über ein gemeinsames Zwischenteil 41 am Schlitten 18 befestigt. Am Zwischenteil 41 sind Motoren 38, 47 für den ersten Schwenkarm 20 bzw. für den zweiten Schwenkarm 24 angeflanscht. Der Motor 38 treibt über einen Zahnriementrieb 40 und ein Getriebe eine mit dem Abtriebsrad des Zahnriementriebes 40 verbundene Welle 39 an, die drehfest mit dem ersten Schwenkarm 20 verbunden ist. Somit wird die Drehbewegung des Motors 38 über den Zahnriementrieb 40 in eine Schwenkbewegung des ersten Schwenkarmes 20 umgesetzt. Auf der Welle 39 ist drehfest ein Zahnrad festgelegt, über das ein Zahnriemen eines zweiten Zahnriementriebes 42 geführt ist, der über ein Zahnrad 45 läuft, das am freien Ende 37 des ersten Schwenkarmes 20 auf einem Wellenstutzen 46 drehfest festgelegt ist, der drehbar innerhalb des Gehäuses 44 des Schwenkarmes 20 gelagert ist.

Wird somit der erste Schwenkarm 20 mittels des Zahnriementriebes 40 um seine Schwenkachse 15 verschwenkt, so läuft dabei der Zahnriemen des zweiten Zahnriementriebes 42 auf dem Zahnrad 45 des Wellenstutzens 46 um und versetzt diesen in eine Drehung, die der Richtung der Schwenkbewegung entgegengesetzt ist. Bei entsprechend gewähltem Übersetzungsverhältnis der beiden Zahnräder des zweiten Zahnriementriebes 42 wird somit die Schwenkbewegung des ersten Schwenkarmes 20 ausgeglichen, so daß der Wellenstutzen 46 seine Winkellage beibehält.

Durch diese Zwangskopplung wird somit auf einfache Weise die durch die Schwenkbewegung veränderte Winkellage korrigiert.

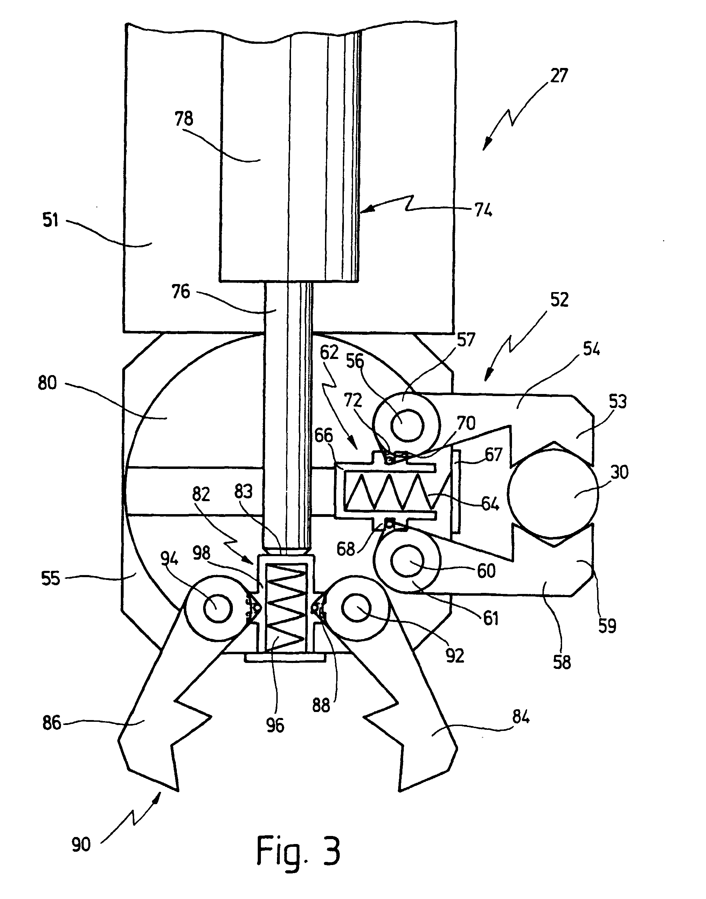

Der zweite Schwenkarm 24, der eine etwas kürzere Armlänge als der erste Schwenkarm 20 aufweist, ist in entsprechender Weise wie der erste Schwenkarm 20 aufgebaut und wird somit gleichfalls über einen ersten Zahnriementrieb 48 angetrieben, wobei wiederum ein zweiter Zahnriementrieb vorgesehen ist, um die Winkellage des Wellenstutzens 50 an seinem freien Ende bei einer Schwenkbewegung zu korrigieren. An den Wellenstutzen 46 bzw. 50 sind die Doppelgreifer 23 bzw. 27 in nicht näher dargestellter Weise befestigt, deren Aufbau nachfolgend anhand von Fig. 3 näher erläutert wird.

Der Doppelgreifer 27 weist gemäß Fig. 3 einen Halter 51 auf, von dem eine Aufnahme 55 quadratischer Grundform hervorsteht. Auf der Aufnahme 55 ist eine Dreheinheit 80 von kreisförmiger

Grundform drehbar gelagert und mittels eines nicht dargestellten Antriebs, zum Beispiel eines Pneumatik- oder Hydraulikzylinders um 90° verschwenkbar, wobei natürlich auch andere Schwenkwinkel möglich sind.

Am Rand der Dreheinheit 80 sind ein erster Greifer 52 und ein zweiter Greifer 90 angeordnet, die nach außen weisen und um 90° gegeneinander versetzt sind.

Der erste Greifer 52 weist ein erstes zangenförmiges Greifelement 54 auf, das auf einer Achse 56 drehbar gelagert ist, sowie ein zweites zangenförmiges Greifelement 58, das spiegelsymmetrisch zum ersten Greifelement 54 in einem gewissen Abstand dazu gleichfalls auf einer Achse 60 drehbar gelagert ist. Die beiden Greifelemente 54, 58 sind durch eine dazwischen angeordnete Spanneinheit 62 an ihren drehbar gelagerten Enden derart federnd beaufschlagt, daß ihre Klauen 53, 59 an ihren freien Enden gegeneinander vorgespannt sind und so ein Werkstück 30 dazwischen fest einschließen.

Die Spanneinheit 62 weist einen Schieber 66 in Form einer zylindrischen Hülse auf, innerhalb derer ein Federelement 64 in Form einer Schraubenfeder vorgesehen ist, das sich an einer äußeren Stützfläche 67 der Dreheinheit 80 abstützt und somit den Schieber 66 zur Mitte der Dreheinheit 80 hin federnd beaufschlagt.

Der Schieber 66 weist ferner an seinen beiden den Achsen 56, 60 zugewandten Seiten Mitnehmerelemente 68 auf, über die die drehbar gelagerten Enden 57, 61 der Greifelemente 54, 58 mitgenommen werden, so daß die Greifelemente 54, 58 durch den Schieber 66 der Spanneinheit 62 mitgenommen werden und somit die Greifelemente 54, 58 infolge der Kraft des Federelementes 64 jeweils mit einem Drehmoment beaufschlagt sind, das sich auf die Klauen 53, 59 überträgt.

Die Mitnehmerelemente 68 bestehen aus jeweils einer Nut 72, die an jeder den Enden 57, 61 zugewandten Seite des Schiebers 66 in einem nach außen weisenden Vorsprung gebildet ist, und in die jeweils ein Stift 70 eingreift, der an dem Ende 57 bzw. 61 gehalten ist. Somit wird auf einfache Weise die Federkraft des Federelementes 64 dazu ausgenutzt, um die beiden Klauen 53, 59 mit einer Kraft gegeneinander zu beaufschlagen.

Der erste Greifer 52 befindet sich in seiner Schließstellung, in der der Schieber 66 nach links von der Stützfläche 67 weg bewegt ist, wobei zwischen den beiden Klauen 53, 59 das Werkstück 30 gehalten ist.

Es ist offensichtlich, daß dann, wenn der Schieber 66 nach rechts in Richtung auf die Stützfläche 67 bewegt wird, über die Mitnehmerelemente 68 die Klauen 53, 59 nach außen bewegt werden und der Greifer 52 somit geöffnet wird.

Der zweite Greifer 90, der gegenüber dem ersten Greifer 52 um 90° versetzt angeordnet ist, entspricht in seinem Aufbau vollständig dem Aufbau des ersten Greifers 52. Der zweite Greifer ist in der Öffnungsstellung dargestellt, in der der Schieber 98 der Spanneinheit 82 gegen die Kraft des Federelementes 96 nach unten gedrückt wird, so daß die Greifelemente 84, 86 nach außen gedreht werden.

Es ist leicht erkennbar, daß hierzu lediglich eine Kraft erforderlich ist, die auf die Stirnfläche 83 des Schiebers der Spanneinheit 82 ausgeübt werden muß.

Hierzu dient eine Betätigungseinrichtung 74, die am Halter 51 angeordnet ist. Die Betätigungseinrichtung 74 weist einen Fluidzylinder 78 auf, dessen Kolben 76 bis zur Stirnfläche 83 des Schiebers der Spanneinheit 82 ausfahrbar ist, um den Schieber gegen die Kraft des Federelementes 96 nach unten zu drücken, so daß sich die Greifelemente 84, 86 nach außen in die Öffnungsstellung bewegen.

Wird der Kolben 76 in den Fluidzylinder 78 eingefahren, so bewegt sich der Greifer 90 in seine Schließstellung.

Im eingefahrenen Zustand des Kolbens 76 kann nun die Dreheinheit 80 um 90° im Uhrzeigersinn verdreht werden, so daß der erste Greifer 52 mittels des Kolbens 76 geöffnet werden kann. Nach Einfahren des Kolbens 76 kann wiederum eine Verdrehung um 90° erfolgen und anschließend ggf. eine Öffnung des anderen Greifelementes 90.

Der Doppelgreifer 27 ist nach außen hin abgedichtet, um ein zuverlässiges Arbeiten auch unter Einwirkung von Kühlschmiermittel zu ermöglichen.

## Patentansprüche

1. Anordnung aus einer Werkzeugmaschine (12) und einer Handhabungsvorrichtung, die aufweist: ein Portal (16) und einen in Horizontalrichtung gesteuert verfahrbaren (Y-Achse) Schlitten (18, 18', 18''), an dem ein erster Schwenkarm (20, 20', 20'') vorgesehen ist, der an seinem freien Ende ein erstes Handhabungselement (22) zur Handhabung eines Teils (30) aufweist, wobei der erste Schwenkarm (20, 20', 20'') um eine horizontale Achse (15) gesteuert verschwenkbar ist (A-Achse), die rechtwinklig zur Bewegungsrichtung des Schlittens (18, 18', 18'') angeordnet ist, wobei eine NC-Steuerung für die Y-Achse und die A-Achse zur Steuerung einer Bewegung des ersten Handhabungselements seitlich in die Werkzeugmaschine (12) hinein oder aus dieser hinaus, sowie zur Bewegung des ersten Handhabungselementes (22) in einer vertikalen Ebene vorgesehen ist, und wobei das erste Handhabungselement (22) auf wahlweise gekrümmten oder linearen Bewegungsbahnen bewegbar ist,
**dadurch gekennzeichnet, daß** die Handhabungsvorrichtung und die Werkzeugmaschine (12) nebeneinander angeordnet sind, ohne dass das Portal (16) über der Werkzeugmaschine (12) verläuft, wobei der erste Schwenkarm (20, 20', 20") auf dem Portal (16) derart verfahrbar ist, daß der über das Ende des Portals (16) ausladende Schwenkarm (20, 20', 20") in einen Arbeitsraum der Werkzeugmaschine (12) hineinreicht.

2. Anordnung aus einer Werzeugmaschine und einer Handhabungsvorrichtung nach Anspruch 1, **dadurch gekennzeichnet, daß** auf dem ersten Schlitten (18, 18', 18") ein zweiter gesteuert verschwenkbarer Schwenkarm (24, 24', 24''') mit einem zweiten Handhabungselement (26) vorgesehen ist.

3. Anordnung aus einer Werzeugmaschine und einer Handhabungsvorrichtung nach Anspruch 1, **dadurch gekennzeichnet, daß** ein zweiter Schlitten (18''') auf dem Portal (16) in Horizontalrichtung gesteuert verfahrbar angeordnet ist, an dem ein zweiter Schwenkarm (24'') um eine horizontale Achse gesteuert verschwenkbar vorgesehen ist.

4. Anordnung aus einer Werzeugmaschine und einer Handhabungsvorrichtung nach Anspruch 2 oder 3, **dadurch gekennzeichnet, daß** eine Bereitstellungsstation (32) zur Bereitstellung von Teilen (30) vorgesehen ist und daß eine Zwischenstation (34) zwischen der Bereitstellungsstation (32) und der Werkzeugmaschine (12) vorgesehen ist, und wobei die Teile (30) wahlweise mittels des ersten Schwenkarmes (20, 20', 20") oder mittels des zweiten Schwenkarmes (24, 24', 24") zwischen der Bereitstellungsstation (32) und der Zwischenstation (34) oder zwischen der Zwischenstation (34) und der Werkzeugmaschine (12) bewegbar sind.

5. Anordnung aus einer Werzeugmaschine und einer Handhabungsvorrichtung nach Anspruch 2, 3 oder 4, **dadurch gekennzeichnet, daß** die Teile (30) zwischen dem ersten (22) und dem zweiten (26) Handhabungselement übergebbar sind.

6. Anordnung aus einer Werzeugmaschine und einer Handhabungsvorrichtung nach einem oder mehreren der vorhergehenden Ansprüche, **dadurch gekennzeichnet, daß** bei zumindest einem Schwenkarm (20: 24) das Handhabungselement (22: 26) mit dem Antrieb (38; 47) des Schwenkarms (20: 24) zwangsgekoppelt ist, um bei Verschwenkung des Schwenkarms (20; 24) die Winkellage der Teile (30) beizubehalten.

7. Anordnung aus einer Werzeugmaschine und einer Handhabungsvorrichtung nach einem oder mehreren der vorhergehenden Ansprüche, **dadurch gekennzeichnet, daß** an zumindest einem Schwenkarm (20: 24) ein Zahnriemengetriebe (40, 42; 48) vorgesehen ist.

8. Anordnung aus einer Werzeugmaschine und einer Handhabungsvorrichtung nach einem oder mehreren der vorhergehenden Ansprüche, **dadurch gekennzeichnet, daß** zumindest ein Handhabungselement (22: 26) einen Doppelgreifer (23: 27) umfaßt.

9. Anordnung aus einer Werzeugmaschine und einer Handhabungsvorrichtung nach Anspruch 8, **dadurch gekennzeichnet, daß** der Doppelgreifer (27) zwei an einer Dreheinheit (80) winklig zueinander versetzt angeordnete Greifer (52; 90) aufweist, wobei die Dreheinheit (80) an einem Halter (51) verschwenkbar festgelegt ist, wobei den Greifern (52; 90) eine gemeinsame Betätigungseinrichtung (74) zum Öffnen und Schließen der Greifer (52: 90) zugeordnet ist, mittels derer der erste Greifer (52) in einer ersten Stellung der Dreheinheit (80) und der zweite Greifer (90) in einer zweiten Stellung der Dreheinheit (80) aktivierbar ist.

10. Anordnung aus einer Werzeugmaschine und einer Handhabungsvorrichtung nach Anspruch 9, **dadurch gekennzeichnet, daß** jeder Greifer (52; 90) zwei Greifelemente (54, 56; 84, 86) aufweist, die auf zueinander parallelen Achsen (56, 60; 42, 94) jeweils am äußeren Rand der Dreheinheit (80) schwenkbar gelagert sind und jeweils mittels einer dazwischen angeordneten Spanneinheit (62; 87) in Richtung auf eine Schließstellung vorgespannt sind, und bei der die gemeinsame Betätigungseinrichtung (74) ein am Halter (51) angeordneter Fluidzylinder (78) ist, über dessen ausfahrbaren Kolben (76) das jeweilige Spannelement (62; 82) zur Bewegung der Greifelemente (54, 58; 84, 86) gegen die Kraft eines Federelementes (64; 96) in eine Öffnungsstellung verschiebbar ist.

11. Anordnung aus einer Werzeugmaschine und einer Handhabungsvorrichtung nach Anspruch 10, **dadurch gekennzeichnet, daß** das Federelement (64; 96) auf einen Schieber (66; 98) wirkt, der über Mitnehmerelemente (68; 88) mit den beiden drehbar festgelegten Enden (57, 61) der Greifelemente (54, 58; 84, 86) gekoppelt ist, um diese in Richtung auf die Schließstellung derart zu beaufschlagen, daß die freien Enden (53, 59) der Greifelemente (54, 58; 84, 86) gegeneinander vorgespannt sind.

## Claims

1. Arrangement of a machine tool (12) and a handling apparatus, comprising a gantry (16), a carriage (18, 18', 18") that can be displaced in controlled fashion in the horizontal direction (Y axis) and which is equipped with a first swinging arm (20, 20', 20") that carries on its free end a first handling element (22) for handling a part (30), the first swinging arm (20, 20', 20") being arranged to swing in a controlled fashion about a horizontal axis (15) (A axis) which is arranged perpendicular to the direction of movement of the carriage (18, 18', 18"), and comprising further an NC control for the Y axis and the A axis for controlling a movement of the first handling element laterally into or out of the machine tool (12), and for moving the first handling element (22) in a vertical plane, wherein the first handling element (22) can be moved selectively on curved or linear paths of movement, **characterized in that** the handling apparatus and the machine tool (12) are arranged side by side, wherein the gantry (16) does not extend above the machine tool (12), wherein the first swinging arm (20, 20', 20") can be displaced on the gantry (16) such that the swinging arm (20, 20', 20"), when protruding beyond the end of the gantry (16), extends into a working space of the machine tool (12).

2. Arrangement of a machine tool and a handling apparatus according to claim 2, **characterized in that** a second swinging arm (24, 24', 24") with a second handling element (26) is provided on the carriage (18, 18', 18") for controlled swinging movement.

3. Arrangement of a machine tool and a handling apparatus according to claim 1, **characterized in that** a second carriage (18'''), carrying a second swinging arm (24") the can be swung in controlled fashion about a horizontal axis, is arranged on the gantry (16) for displacement in a controlled fashion in the horizontal direction.

4. Arrangement of a machine tool and a handling apparatus according to claim 2 or 3, **characterized in that** a preparation station (32) is provided for presenting parts (30) for handling and **in that** an intermediate station (34) is located between the preparation station (32) and the machine tool (12), and wherein the parts (30) can be moved selectively by means of the first swinging arm (20, 20', 20") or by means of the second swinging arm (24, 24', 24") between the preparation station (32) and the intermediate station (34), or between the intermediate station (34) and the machine tool (12).

5. Arrangement of a machine tool and a handling apparatus according to claim 2, 3 or 4, **characterized in that** the parts (30) can be transferred between the first (22) and the second (26) handling element.

6. Arrangement of a machine tool and a handling apparatus according to one or more of the preceding claims, **characterized in that** the handling element (22; 26) of at least one swinging arm (20; 24) is positively coupled with the drive (38; 47) of the swinging arm (20; 24) in order to retain the angular position of the parts (30) during any swinging movements of the swinging arm (20; 24).

7. Arrangement of a machine tool and a handling apparatus according to one or more of the preceding claims, **characterized in that** a toothed belt gearing (40, 42; 48) is provided on at least one swinging arm (20; 24).

8. Arrangement of a machine tool and a handling apparatus according to one or more of the preceding claims, **characterized in that** at least one handling element (22; 26) comprises a double gripper (23; 27).

9. Arrangement of a machine tool and a handling apparatus according to claim 8, **characterized in that** the double gripper (27) comprises two grippers (52; 90) provided on a turning unit (80) at an angle one to the other, the turning unit (80) being pivotally fixed on a holder (51), and the grippers (52; 90) being assigned common actuation means (74) for opening and closing the grippers (52; 90), by means of which the first gripper (52) can be actuated in a first position of the turning unit (80), while the second gripper (90) can be actuated in a second position of the turning unit (80).

10. Arrangement of a machine tool and a handling apparatus according to claim 9, **characterized in that** each of the grippers (52; 90) comprises two gripper elements (54, 56; 84, 86) that are pivotally supported on mutually parallel axes (56, 60; 42, 94) at the outermost edges of the turning unit (80) and are biased toward a closed position by biasing means (62; 87) arranged therebetween, and wherein the common actuating means (74) are designed as fluid cylinder (78) provided on the holder (51) whose extensible piston (76) acts to displace the respective chucking unit (62; 82) so that it will move the gripping elements (54, 58; 84, 86) into an open position against the force of a spring element (64; 96).

11. Arrangement of a machine tool and a handling apparatus according to claim 10, **characterized in that** the spring element (64; 96) acts on a slide (66; 98), which is coupled via entrainer elements (68; 88) with the two pivotally fixed ends (57, 61) of the gripper elements (54, 58; 84, 86) in order to urge them toward the closed position in a manner such that the free ends (53, 59) of the gripper elements (54, 58; 84, 86) are biased toward each other.

## Revendications

1. Dispositif constitué d'une machine-outil (12) et d'un dispositif de manipulation qui comprend : un portique (16) et un chariot (18, 18, 18") déplaçable dans la direction horizontale (axe Y) de manière commandée, sur lequel est prévu un premier bras pivotant (20, 20', 20"), qui présente, à son extrémité libre, un premier élément de manipulation (22) pour la manipulation d'une pièce (30), le premier bras pivotant (20, 20', 20") pouvant pivoter de manière commandée autour d'un axe horizontal (axe A) (15) qui est disposé à angle droit par rapport à la direction de déplacement du chariot (18, 18', 18"), une commande numérique étant prévue pour l'axe Y et l'axe A en vue de la commande d'un déplacement du premier élément de manipulation latéralement, à l'intérieur de la machine-outil (12) ou à l'extérieur de celle-ci, ainsi que pour le déplacement du premier élément de manipulation (22) dans un plan vertical, et le premier élément de manipulation (22) étant déplaçable au choix sur des trajectoires courbes ou linéaires, **caractérisé en ce que** le dispositif de manipulation et la machine-outil (12) sont disposés l'un à côté de l'autre sans que le portique (16) s'étende au-dessus de la machine-outil (12), le premier bras pivotant (20, 20', 20") étant déplaçable sur le portique (16) de manière que le bras pivotant (20, 20', 20"), qui est en porte-à-faux au-dessus de l'extrémité du portique (16), pénètre à l'intérieur d'un espace de travail de la machine-outil (12).

2. Dispositif constitué d'une machine-outil et d'un dispositif de manipulation selon la revendication 1, **caractérisé en ce que** sur le premier chariot (18, 18', 18") est prévu un deuxième bras pivotant (24, 24', 24"), pouvant pivoter de manière commandée, avec un deuxième élément de manipulation (26).

3. Dispositif constitué d'une machine-outil et d'un dispositif de manipulation selon la revendication 1, **caractérisé en ce que** sur le portique (16) est monté un deuxième chariot (18''') qui est déplaçable de manière commandée dans la direction horizontale et sur lequel est prévu un deuxième bras pivotant (24") qui peut pivoter de manière commandée autour d'un axe horizontal.

4. Dispositif constitué d'une machine-outil et d'un dispositif de manipulation selon la revendication 2 ou 3, **caractérisé en ce qu'**un poste de préparation (32) est prévu pour la préparation de pièces (30) et **en ce qu'**un poste intermédiaire (34) est prévu entre le poste de préparation (32) et la machine-outil (12), les pièces (30) étant déplaçables au choix au moyen du premier bras pivotant (20, 20', 20") ou au moyen du deuxième bras pivotant (24, 24', 24"), entre le poste de préparation (32) et le poste intermédiaire (34), ou entre le poste intermédiaire (34) et la machine-outil (12).

5. Dispositif constitué d'une machine-outil et d'un dispositif de manipulation selon les revendications 2, 3 ou 4, **caractérisé en ce que** les pièces (30) peuvent être transférées entre le premier élément de manipulation (22) et le deuxième élément de manipulation (26).

6. Dispositif constitué d'une machine-outil et d'un dispositif de manipulation selon une ou plusieurs des revendications précédentes, **caractérisé en ce que** dans le cas d'au moins un bras pivotant (20 ; 24), l'élément de manipulation (22 ; 26) est accouplé de manière forcée au dispositif d'entraînement (38 ; 47) du bras pivotant (20 ; 24), afin de conserver la position angulaire des pièces (30) lors du pivotement du bras pivotant (20 ; 24).

7. Dispositif constitué d'une machine-outil et d'un dispositif de manipulation selon une ou plusieurs des revendications précédentes, **caractérisé en ce qu'**une transmission à courroie crantée (40, 42 ; 48) est prévue sur au moins un bras pivotant (20 ; 24).

8. Dispositif constitué d'une machine-outil et d'un dispositif de manipulation selon une ou plusieurs des revendications précédentes, **caractérisé en ce qu'**au moins un élément de manipulation (22 ; 26) comprend une pince double (23 ; 27).

9. Dispositif constitué d'une machine-outil et d'un dispositif de manipulation selon la revendication 8, **caractérisé en ce que** la pince double (27) comporte deux pinces (52 ; 90) disposées décalées angulairement l'une par rapport à l'autre sur une unité de rotation (80), l'unité de rotation étant fixée de manière pivotante sur un support (51), aux pinces (52 ; 90) étant associé un dispositif d'actionnement (74) commun pour l'ouverture et la fermeture des pinces (52 ; 90), au moyen duquel la première pince (52) peut être activée dans une première position de l'unité de rotation (80) et la deuxième pince (90) dans une deuxième position de l'unité de rotation (80).

10. Dispositif constitué d'une machine-outil et d'un dispositif de manipulation selon la revendication 9, **caractérisé en ce que** chaque pince (52 ; 90) comporte deux éléments de préhension (54, 56 ; 84, 86) qui sont montés de manière à pouvoir pivoter sur des axes (56, 60 ; 42, 94) parallèles entre eux, chacun sur le bord extérieur de l'unité de rotation (80) et qui sont précontraints dans le sens d'une position de fermeture, chacun au moyen d'une unité de serrage (62 ; 87) intercalée, et dans laquelle le dispositif d'actionnement (74) commun est un cylindre hydraulique (78) monté sur le support (51), dont le piston (76) extractible permet de faire coulisser l'élément de serrage (62 ; 82) correspondant, en vue du déplacement, dans une position d'ouverture, des éléments de préhension (54, 58 ; 84, 86) à l'encontre de la force d'un élément élastique (64 ; 96).

11. Dispositif constitué d'une machine-outil et d'un dispositif de manipulation selon la revendication 10, **caractérisé en ce que** l'élément élastique (64 ; 96) agit sur un coulisseau (66 ; 98) qui est accouplé, par des éléments entraîneurs (68 ; 88), au deux extrémités (57, 61) fixées tournantes des éléments de préhension (54, 58 ; 84, 86), afin de solliciter ceux-ci dans le sens de la position de fermeture, de manière que les extrémités (53, 59) des éléments de préhension (54, 58 ; 84, 86) soient précontraintes les unes par rapport aux autres.
